# EUROPÄISCHE PATENTSCHRIFT

(11) **EP 4 409 066 B1**
(45) Veröffentlichungstag und Bekanntmachung des Hinweises auf die Patenterteilung: **20.08.2025**
(21) Anmeldenummer: 22783477.7
(22) Anmeldetag: 13.09.2022
(51) Int. Cl.: D21F 3/02, C08G 18/10, C08G 18/12, C08G 18/32, C08G 18/38, C08G 18/44, C08G 18/48, C08G 18/76

(54) **SCHUHPRESSWALZENMANTEL**
SHOE PRESS ROLL CASING
BOÎTIER DE PRESSE À PATIN

(30) Priorität: 28.09.2021 DE 102021125037
(43) Veröffentlichungstag der Anmeldung: 07.08.2024
(73) Patentinhaber: Voith Patent GmbH, 89522 Heidenheim (DE)
(72) Erfinder: DELMAS, Delphine, 89522 Heidenheim (DE); MATUSCHCZYK, Uwe, 73312 Geislingen (DE)
(74) Vertreter: Voith Patent GmbH - Patentabteilung
(86) Internationale Anmeldenummer: PCT/EP2022/075333
(87) Internationale Veröffentlichungsnummer: WO 2023/052120

(56) Entgegenhaltungen:
- EP-A1- 2 248 944
- WO-A1-2019/011557
- WO-A1-2021/074492
- SILVIA FARSETTI: "natrual resource sustainability", 1 January 2012 (2012-01-01), pages 1 - 141, XP055040108, Retrieved from the Internet <URL:http://etd.adm.unipi.it/theses/available/etd-04062011-112056/unrestricted/Tesi_PhD_Farsetti.pdf> [retrieved on 20121005]

## Beschreibung

Die Erfindung betrifft einen Schuhpresswalzenmantel für eine Maschine zur Herstellung und/oder Veredelung einer Faserstoffbahn, wie Papier-, Karton- oder Tissuebahn, umfassend ein Matrixmaterial aus Polyurethan, welches im Wesentlichen aus 4,4'-MDI als Isocyanat, wenigstens einem Polyol und wenigstens einem Vernetzer gebildet ist. Ferner betrifft die Erfindung eine Schuhpresse mit einem solchen Schuhpresswalzenmantel, sowie eine Maschine zur Herstellung und/oder Veredelung einer Faserstoffbahn mit einer solchen Schuhpresse.

Ein solcher, gattungsgemäßer Schuhpresswalzenmantel ist beispielsweise aus der Druckschrift EP2248944 A1 bekannt.

Mit dem Begriff "im Wesentlichen" ist in diesem Zusammenhang gemeint, dass das Polyurethan-Matrixmaterial neben den genannten Ausgangsmaterialien auch noch geringe Mengen anderer Materialien umfassen kann, wie zum Beispiel geringe Mengen an Katalysatoren für den oder in dem wenigstens einen Vernetzer. Diese anderen Materialien machen jedoch vorzugsweise weniger als 8 Gew.-% aller Ausgangsmaterialien aus, weiter bevorzugt weniger als 5 Gew.-%, noch weiter bevorzugt weniger als 2 Gew.-%.

Schuhpressen finden in der Papierindustrie zahlreiche Anwendungen. Beispielsweise können Schuhpressen verwendet werden, um eine Tissuebahn von einem Pressfilz auf die Oberfläche eines Yankee-Zylinders zu transferieren. Eine Schuhpresse zeichnet sich besonders durch ihren verlängerten Pressspalt aus, welcher es ermöglicht, die Faserstoffbahn effizient zu pressen, ohne jedoch einen zu hohen Spitzendruck auf diese auszuüben, welcher ansonsten die Dicke der Faserstoffbahn beeinträchtigt.

Um den verlängerten Pressspalt erzielen zu können, bedarf es neben einer Walze einen gegen die Walze pressbaren Schuh, dessen Oberfläche eine konkave Krümmung aufweist, welche an die Krümmung der Walze angepasst ist. Im bestimmungsgemäßen Betrieb wird über den Schuh ein rotierender Schuhpresswalzenmantel geführt. Dabei handelt es sich um einen endlosen Schlauch, der ausreichend flexibel ausgebildet sein muss, um die ständigen Biegewechselbelastungen zwischen konkaver und konvexer Krümmung beim Umlaufen aushalten zu können. Der Schuhpresswalzenmantel ist im bestimmungsgemäßen Gebrauch extrem großen Beanspruchungen ausgesetzt, die zu einem Verschleiß führen und es somit erforderlich machen, ihn regelmäßig auszutauschen.

Die bekannten Schuhpresswalzenmäntel bestehen überwiegend aus Polyurethan, welches ein Matrixmaterial bildet, in das in der Regel Verstärkungsfäden oder dergleichen eingebettet sind. Die Menge des auf diesem Wege verbrauchten Polyurethans ist recht beachtlich. Nach ihrer Nutzung werden Schuhpresswalzenmäntel zumeist thermisch verwertet, bzw. verbrannt. Dies ist aus Umweltgesichtsgründen nicht optimal.

Auch ist es ein Bestreben, die bekannten Schuhpressmäntel hinsichtlich diverser Eigenschaften, die für die Verwendung als Matrixmaterial eines Schuhpresswalzenmantels von Bedeutung sind, weiter zu verbessern. Dabei kann es sich insbesondere um eine oder mehrere der folgenden Eigenschaften handeln: Rissbeständigkeit (Rissausweitung), Weiterreißwiderstand, Tan Delta, Kraft bei 10% Dehnung nach Hydrolyse, Bruchspannung, Bruchdehnung, Abriebsbeständigkeit, und Gewichtszunahme bei Lagerung in flüssigen Medien.

Es ist daher Aufgabe der vorliegenden Erfindung, dem zuvor beschriebenen Problem entgegenzuwirken, insbesondere einen Beitrag zur Dekarbonisierung zu leisten. Gleichzeitig sollen die für den Betrieb eines Schuhpresswalzenmantels relevanten Eigenschaften nicht negativ beeinträchtigt werden, sondern vorzugsweise noch verbessert werden.

Gelöst wird diese Aufgabe dadurch, dass bei dem eingangs beschriebenen, gattungsgemäßen Schuhpresswalzenmantel das Polyurethan-Matrixmaterial zu wenigstens 20 Gew.-% biobasiert ist, wobei das wenigstens eine Polyol und der wenigstens eine Vernetzer aus einer der folgenden Kombinationen ausgewählt sind:
a) PTMEG als Polyol und eine Mischung aus MCDEA und PTMEG als Vernetzer, wobei das PTMEG im Polyol und im Vernetzer biobasiert ist;
b) Polycarbonat als Polyol und eine Mischung aus MCDEA und Polycarbonatpolyol als Vernetzer, wobei das Polycarbonatpolyol im Vernetzer biobasiert ist;
c) eine Mischung aus Polycarbonatpolyol und PTMEG als Polyol und 1,4-BDO als Vernetzer, wobei das Polycarbonatpolyol im Polyol biobasiert ist;
d) PTMEG als Polyol und einer Mischung aus PTMEG und MCDEA als Vernetzer, wobei das 4,4'-MDI im Isocyanat und das PTMEG im Polyol biobasiert sind.

Der Begriff "biobasiert" bedeutet dabei, dass das Material nicht auf Erdölbasis hergestellt ist, sondern aus nachwachsenden Rohstoffen. Das fertige erfindungsgemäße Produkt lässt sich von herkömmlichen Schuhpressmänteln unterscheiden, da es möglich ist, mittels der Radiokarbonmethode zu bestimmen, wieviel Prozent des im Material befindlichen Kohlenstoffs vom Isotopentyp ¹⁴C ist. Dieses Kohlenstoffisotop ist insofern instabil, als dass es einem radioaktiven Zerfallsprozess unterworfen ist. In Erdöl kommt es daher so gut wie nicht mehr vor. Somit kann beispielsweise mittels des normierten Prüfverfahrens gemäß ASTM D6866 relativ einfach der biobasierte Anteil von Kohlenstoffatomen zum Gesamtanteil der Kohlenstoffatome in einem Material bestimmt werden.

Zwar ist die Herstellung von Polyurethan aus - zumindest teilweise - biobasierten Ausgangsmaterialien *per* se bereits bekannt, jedoch wurde dies bisher konkret für Schuhpresswalzenmäntel nicht in Betracht gezogen. Beispielsweise wird in der Druckschrift WO 2021/074492A1 beschrieben, dass sich Walzenbezüge aus recycelten Ausgangsmaterialen und wahlweise zusätzlich aus biobasierten Ausgangsmaterialien herstellen lassen. Die Erfinder haben zu ihrer Überraschung festgestellt, dass sich auf Basis biobasierter Ausgangsmaterialien für die Polyurethanmatrix nicht nur Schuhpresswalzenmäntel mit vergleichbaren, bzw. identischen mechanischen Eigenschaften wie bei der herkömmlichen Verwendung von erdölbasierten Ausgangsmaterialien herstellen lassen, sondern dass, zumindest für einige spezielle Zusammensetzungen, die mechanischen Eigenschaften der Schuhpressmäntel sogar verbessert werden können. Woran dies genau liegt, ist bisher noch nicht klar, doch haben Versuche hierzu klare Ergebnisse geliefert.

Auf diese Weise ist es durch die vorliegende Erfindung nicht nur möglich, die CO₂ - Bilanz bei der Herstellung von Schuhpressmänteln zu verbessern, da das beim Verbrennen der Schuhpresswalzenmäntel freigesetzte CO₂ zumindest teilweise durch die Pflanzen wieder aufgenommen wird, die dann zur Herstellung neuer Schuhpresswalzenmäntel verwendet werden, sondern die vorliegende Erfindung bietet darüber hinaus auch noch die Möglichkeit, die mechanischen Eigenschaften der erfindungsgemäßen Schuhpressmäntel positiv beeinflussen zu können.

Vorzugsweise ist das Polyurethan-Matrixmaterial zu wenigstens 50 Gew.-% biobasiert. Es wäre sogar vorstellbar, den Schuhpressmantel vollständig aus biobasierten Ausgangsmaterialien herzustellen.

Dabei kann das das 4,4'-MDI als Isocyanat in dem Polyurethan-Matrixmaterial, sofern es nicht gemäß der vorliegenden Erfindung explizit als biobasiert gekennzeichnet ist, erdölbasiert sein.

Auch kann das wenigstens eine Polyol in dem Polyurethan-Matrixmaterial, sofern es nicht gemäß der vorliegenden Erfindung explizit als biobasiert gekennzeichnet ist, erdölbasiert sein.

Ferner kann auch der wenigstens eine Vernetzer in dem Polyurethan-Matrixmaterial, sofern er nicht gemäß der vorliegenden Erfindung explizit als biobasiert gekennzeichnet ist, erdölbasiert sein.

Im Folgenden soll gelten, dass die Ausgangsstoffe, die nicht explizit als biobasiert gekennzeichnet sind, erdölbasiert sein sollen.

Das erste konkrete Ausführungsbeispiel einer Polyurethan-Matrixzusammensetzung für einen erfindungsgemäßen Schuhpressmantel sieht vor, dass das Polyurethan der Polymermatrix gebildet ist aus: 4,4'-MDI als Isocyanat, PTMEG als Polyol und eine Mischung aus MCDEA und PTMEG als Vernetzer, wobei das PTMEG im Polyol und im Vernetzer biobasiert ist. MCDEA steht dabei für 4,4'-methylenbis-(3-chloro-2,6-diethylanilin).

Nachfolgend wird diese Zusammensetzung (letzte Zeile in der Tabelle 1A) mit einer entsprechenden Zusammensetzung aus rein erdölbasierten Ausgangsmaterialien (vorletzte Zeile in der Tabelle 1A) verglichen.

**Tabelle 1A:**

| **Prepolymer** | | **Vernetzer** | **biobasierter Anteil [%]** |
|---|---|---|---|
| **Isocyanat** | **Polyol** | | |
| 4,4'-MDI | PTMEG | MCDEA, PTMEG | 0 |
| 4,4'-MDI | biobasiertes PTMEG | MCDEA, biobasiertes PTMEG | 61 |

Versuche an entsprechenden Gussproben haben gezeigt, dass sich das Polyurethan aus biobasierten Ausgangsstoffen (letzte Zeile in der Tabelle 1B) hinsichtlich diverser Eigenschaften, die für die Verwendung als Matrixmaterial eines Schuhpresswalzenmantels von Bedeutung sind, vorteilhaft von dem entsprechenden Vergleichsmaterial aus erdölbasiertem Matrixmaterial (vorletzte Zeile in der Tabelle 1B) unterscheidet.

**Tabelle 1B:**

| **Rissausweitung [mm]** | **Weiterreißwiderstand (DIN 53515)** | | **Tan Delta 20°C [-]** | **Tan Delta 60°C [-]** |
|---|---|---|---|---|
| | **Max Kraft [N/mm]** | **Integrale der Kurve (Energie)** | | |
| 0,6 | 58 | 2213 | 0,1 | 0,08 |
| 0 | 64 | 2817 | 0,08 | 0,06 |

Bei der Eigenschaft: "Rissausweitung [mm]" handelt es sich um das Ergebnis eines Tests, bei welchem eine genormte Probe gezielt gekerbt und dann in einem Versuchsstand an der Kerbstelle einer Million Biegezyklen ausgesetzt wird.

Anschließend wird gemessen, wie weit sich der Riss an der Kerbstelle vergrößert hat.

Je kleiner dieser Wert ist, desto besser ist das Polyurethan als Matrixmaterial für einen Schuhpresswalzenmantel geeignet. In dem ersten Ausführungsbeispiel erkennt man, dass sich bei dem biobasiertem Polyurethan der Riss gar nicht weiter ausgeweitet hat, wohingegen er sich bei dem erdölbasiertem Polyurethan um 0,6mm vergrößert hat.

Bei der Eigenschaft: "Weiterreißwiderstand" handelt es sich um das Ergebnis eines in der Norm DIN 53515 beschriebenen Versuchs, bei welchem die Kraft bestimmt wird, die eine mit Schnittverletzung versehene Probe dem Weiterreißen entgegensetzt. Dabei kann auch die Fläche (bzw. das Integral) unter der Kurve im Kraft-Dehnungsdiagramm, welche der Energie entspricht, bestimmt werden. Je größer der jeweilige Wert ist, desto besser ist das Polyurethan als Matrixmaterial für einen Schuhpresswalzenmantel geeignet. In dem ersten Ausführungsbeispiel erkennt man, dass bei der Probe aus biobasiertem Polyurethan die Werte über jenen der Vergleichsprobe aus erdölbasiertem Polyurethan liegen.

Bei der Eigenschaft: "Tan Delta" handelt es sich in der Rheologie um einen Verlustfaktor, der das Verhältnis zwischen Verlustmodul G" (Imaginärteil) und Speichermodul G' (Realteil) beschreibt, als Tan Delta = G" / G'. Je höher der Verlustfaktor, desto mehr nähert sich das Verhalten einer Probe dem einer ideal-viskosen Flüssigkeit mit newtonschem Fließverhalten an. Je niedriger der Verlustfaktor, desto mehr entspricht das Verhalten einer Probe dem eines ideal-elastischen Festkörpers. Letzteres ist für das Matrixmaterial für einen Schuhpresswalzenmantel wünschenswert. In dem ersten Ausführungsbeispiel erkennt man, dass bei dem biobasiertem Polyurethan die Werte von Tan Delta, sowohl bei 20°C als auch bei 60°C kleiner als bei dem entsprechenden erdölbasierten Polyurethan sind.

Ein zweites konkretes Ausführungsbeispiel einer Polyurethan-Matrixzusammensetzung für einen erfindungsgemäßen Schuhpressmantel sieht vor, dass das Polyurethan der Polymermatrix gebildet ist aus: 4,4'-MDI als Isocyanat, Polycarbonat als Polyol und eine Mischung aus MCDEA und Polycarbonatpolyol als Vernetzer, wobei das Polycarbonatpolyol im Vernetzer biobasiert ist.

Nachfolgend wird diese Zusammensetzung (letzte Zeile in der Tabelle 2A) mit einer entsprechenden Zusammensetzung aus rein erdölbasierten Ausgangsmaterialien (vorletzte Zeile in der Tabelle 2A) verglichen.

**Tabelle 2A:**

| **Prepolymer** | | **Vernetzer** | **biobasierter Anteil [%]** |
|---|---|---|---|
| **Isocyanat** | **Polyol** | | |
| 4,4'-MDI | Polycarbonat | MCDEA, Polycarbonatpolyol | 0 |
| 4,4'-MDI | Polycarbonat | MCDEA, biobasiertes Polycarbonatpolyol | 25 |

Versuche an entsprechenden Gussproben haben gezeigt, dass sich das Polyurethan aus biobasierten Ausgangsstoffen (letzte Zeile in der Tabelle 2B) hinsichtlich diverser Eigenschaften, die für die Verwendung als Matrixmaterial eines Schuhpresswalzenmantels von Bedeutung sind, vorteilhaft von dem entsprechenden Vergleichsmaterial aus erdölbasiertem Matrixmaterial (vorletzte Zeile in der Tabelle 2B) unterscheidet.

**Tabelle 2B:**

| **Tan Delta 20°C [-]** | **Tan Delta 60°C [-]** | **Quellung H₂O [%]** | **Quellung H₂O₂ [%]** | **Kraft bei 10% Dehnung nach Hydrolyse [%]** | **Bruchspannung [N/mm²]** | **Bruchdehnung [%]** |
|---|---|---|---|---|---|---|
| 0,12 | 0,08 | 1 | 1,8 | 68 | 39 | 352 |
| 0,09 | 0,07 | 0,9 | 0,7 | 73 | 42 | 427 |

Auch bei dem zweiten Ausführungsbeispiel lässt sich erkennen, dass die Tan Delta-Werte sowohl bei 20°C als auch bei 60°C kleiner und somit besser bei der Polyurethanprobe mit biobasiertem Anteil als bei der entsprechenden Vergleichsprobe aus rein erdölbasierten Anteilen sind.

Bei den Eigenschaften: "Quellung H₂O" und "Quellung H₂O₂" handelt es sich um die prozentuale Gewichtszunahme, wenn das Probenmaterial längere Zeit in Wasser bzw. in Wasserperoxid eingelegt wird. Je kleiner die Quellung ist, desto besser ist das Polyurethan als Matrixmaterial für einen Schuhpresswalzenmantel geeignet. In dem zweiten Ausführungsbeispiel erkennt man, dass bei der Probe aus biobasiertem Polyurethan die entsprechenden Werte unter jenen der Vergleichsprobe aus erdölbasiertem Polyurethan liegen.

Bei der Eigenschaft: "Kraft bei 10% Dehnung nach Hydrolyse" handelt es sich im Kraft-Dehnungsdiagram um die Kraft, die man für eine Dehnung einer Probe um 10% benötigt, nachdem die Probe einer Hydrolyse ausgesetzt worden ist. Genauer gesagt, bedeutet zum Beispiel der Wert 73%, dass für eine Dehnung von 10% nach der Hydrolyse nur noch 73% von der Kraft benötigt wird, welche vor der Hydrolyse benötigt wurde. Je größer dieser Wert ist, desto besser ist das Polyurethan als Matrixmaterial für einen Schuhpresswalzenmantel geeignet. In dem zweiten Ausführungsbeispiel erkennt man, dass bei der Probe aus biobasiertem Polyurethan der entsprechende Wert über jenem der Vergleichsprobe aus erdölbasiertem Polyurethan liegt.

Bei den Eigenschaften: "Bruchspannung" und "Bruchdehnung" handelt es sich dem Fachmann geläufige Ergebnisse aus standarisierten Zugversuchen. Je größer diese Werte sind, desto besser ist das Polyurethan als Matrixmaterial für einen Schuhpresswalzenmantel geeignet. In dem zweiten Ausführungsbeispiel erkennt man, dass bei der Probe aus biobasiertem Polyurethan die entsprechenden Werte über jenen der Vergleichsprobe aus erdölbasiertem Polyurethan liegen.

Ein drittes konkretes Ausführungsbeispiel einer Polyurethan-Matrixzusammensetzung für einen erfindungsgemäßen Schuhpressmantel sieht vor, dass das Polyurethan der Polymermatrix gebildet ist aus: 4,4'-MDI als Isocyanat, eine Mischung aus Polycarbonatpolyol und PTMEG als Polyol und 1,4-BDO als Vernetzer, wobei das Polycarbonatpolyol im Polyol biobasiert ist. 1,4-BDO steht dabei für 1,4-Butanediol.

Nachfolgend wird diese Zusammensetzung (letzte Zeile in der Tabelle 3A) mit einer entsprechenden Zusammensetzung aus rein erdölbasierten Ausgangsmaterialien (vorletzte Zeile in der Tabelle 3A) verglichen.

**Tabelle 3A:**

| **Prepolymer** | | **Vernetzer** | **biobasierter Anteil [%]** |
|---|---|---|---|
| **Isocyanate** | **Polyol** | | |
| 4,4'-MDI | Polycarbonatepolyol, PTMEG | 1,4-BDO | 0 |
| 4,4'-MDI | biobasiertes Polycarbonatepolyol, PTMEG | 1,4-BDO | 51 |

Versuche an entsprechenden Gussproben haben gezeigt, dass sich das Polyurethan aus biobasierten Ausgangsstoffen (letzte Zeile in der Tabelle 3B) hinsichtlich diverser Eigenschaften, die für die Verwendung als Matrixmaterial eines Schuhpresswalzenmantels von Bedeutung sind, vorteilhaft von dem entsprechenden Vergleichsmaterial aus erdölbasiertem Matrixmaterial (vorletzte Zeile in der Tabelle 3B) unterscheidet.

**Tabelle 3B:**

| **Rissausweitung [mm]** | **Weiterreißwiderstand (DIN 53515)** | **Kraft bei 10% Dehnung nach Hydrolyse [%]** | **Quellung H₂O₂ [%]** |
|---|---|---|---|
| | **Integrale der Kurve (Energie)** | | |
| 0,1 | 3986 | 73 | 1,6 |
| 0,2 | 4679 | 85 | 0,4 |

In dem dritten Ausführungsbeispiel erkennt man, dass bei der Probe aus biobasiertem Polyurethan der Wert für die Quellung H₂O₂ unter jenem der Vergleichsprobe aus erdölbasiertem Polyurethan liegt, wohingegen alle übrigen Werte über den entsprechenden Werten der Vergleichsprobe liegen. Abgesehen von der Rissausweitung ist die Probe aus biobasiertem Polyurethan somit besser als die Vergleichsprobe für den Einsatz als Matrixmaterial für einen Schuhpresswalzenmantel geeignet.

Ein viertes konkretes Ausführungsbeispiel einer Polyurethan-Matrixzusammensetzung für einen erfindungsgemäßen Schuhpressmantel sieht vor, dass das Polyurethan der Polymermatrix gebildet ist aus: 4,4'-MDI als Isocyanat, PTMEG als Polyol und einer Mischung aus PTMEG und MCDEA als Vernetzer, wobei das 4,4'-MDI im Isocyanat und das PTMEG im Polyol biobasiert sind.

Nachfolgend wird diese Zusammensetzung (letzte Zeile in der Tabelle 4A) mit einer entsprechenden Zusammensetzung aus rein erdölbasierten Ausgangsmaterialien (vorletzte Zeile in der Tabelle 4A) verglichen.

**Tabelle 4A:**

| **Prepolymer** | | **Vernetzer** | **biobasierter Anteil [%]** |
|---|---|---|---|
| **Isocyanate** | **Polyol** | | |
| 4,4'-MDI | PTMEG | PTMEG, MCDEA | 0 |
| biobasiertes 4,4'-MDI | biobasiertes PTMEG | PTMEG, MCDEA | 76 |

Versuche an entsprechenden Gussproben haben gezeigt, dass sich das Polyurethan aus biobasierten Ausgangsstoffen (letzte Zeile in der Tabelle 4B) hinsichtlich diverser Eigenschaften, die für die Verwendung als Matrixmaterial eines Schuhpresswalzenmantels von Bedeutung sind, vorteilhaft von dem entsprechenden Vergleichsmaterial aus erdölbasiertem Matrixmaterial (vorletzte Zeile in der Tabelle 4B) unterscheidet.

**Tabelle 4B:**

| **Bruchspannung [N/mm²]** | **Gewichtszunahme H₂O₂ [%]** | **Gewichtszunahme H₂O [%]** | **Tan Delta 20°C [-]** | **Tan Delta 60°C [-]** | **Abriebswert [mm³]** | **Erhöhung des Abriebswerts nach Hydrolyse [%]** |
|---|---|---|---|---|---|---|
| 37 | 5,3 | 1,5 | 0,1 | 0,08 | 32 | 240 |
| 42 | 3,9 | 1,4 | 0,08 | 0,06 | 46 | 81 |

In dem vierten Ausführungsbeispiel erkennt man, dass bei der Probe aus biobasiertem Polyurethan der Wert für die Bruchspannung über jenem der Vergleichsprobe aus erdölbasiertem Polyurethan liegt, wohingegen die Werte für die Gewichtszunahme H₂O₂, für die Gewichtszunahme H₂O und für Tan Delta bei 20°C und 60°C unter den entsprechenden Werten der Vergleichsprobe liegen. Somit ist die Probe aus biobasiertem Polyurethan hinsichtlich all dieser Werte besser als die Vergleichsprobe für den Einsatz als Matrixmaterial für einen Schuhpresswalzenmantel geeignet.

Bei der Eigenschaft: "Abriebswert" handelt es sich um das Ergebnis eines Tests, um die Stärke des Abriebs zu bestimmen, die das Probenmaterial unter standarisierten Bedingungen erfährt. Je kleiner dieser Wert ist, desto besser ist das Polyurethan als Matrixmaterial für einen Schuhpresswalzenmantel geeignet. In dem vierten Ausführungsbeispiel erkennt man, dass bei der Probe aus biobasiertem Polyurethan der Abriebswert zwar über dem Wert der Vergleichsprobe aus erdölbasiertem Polyurethan liegt, jedoch nimmt dieser Wert nach der Hydrolyse prozentual viel weniger zu als bei der Vergleichsprobe, was positiv ist.

Weitere Aspekte der vorliegenden Erfindung betreffen eine Maschine zur Herstellung und/oder Veredelung einer Faserstoffbahn, wie Papier-, Karton- oder Tissuebahn, umfassend einen zuvor beschrieben, erfindungsgemäßen Schuhpresswalzenmantel, sowie eine Maschine zur Herstellung und/oder Veredelung einer Faserstoffbahn, wie Papier-, Karton- oder Tissuebahn, umfassend eine solche Schuhpresse.

## Patentansprüche

1. Schuhpresswalzenmantel für eine Maschine zur Herstellung und/oder Veredelung einer Faserstoffbahn, wie Papier-, Karton- oder Tissuebahn, umfassend ein Matrixmaterial aus Polyurethan, welches im Wesentlichen aus 4,4'-MDI als Isocyanat, wenigstens einem Polyol und wenigstens einem Vernetzer gebildet ist, **dadurch gekennzeichnet, dass** das Polyurethan-Matrixmaterial zu wenigstens 20 Gew.-% biobasiert ist, wobei das wenigstens eine Polyol und der wenigstens eine Vernetzer aus einer der folgenden Kombinationen ausgewählt sind:
a) PTMEG als Polyol und eine Mischung aus MCDEA und PTMEG als Vernetzer, wobei das PTMEG im Polyol und im Vernetzer biobasiert ist;
b) Polycarbonat als Polyol und eine Mischung aus MCDEA und Polycarbonatpolyol als Vernetzer, wobei das Polycarbonatpolyol im Vernetzer biobasiert ist;
c) eine Mischung aus Polycarbonatpolyol und PTMEG als Polyol und 1,4-BDO als Vernetzer, wobei das Polycarbonatpolyol im Polyol biobasiert ist;
d) PTMEG als Polyol und einer Mischung aus PTMEG und MCDEA als Vernetzer, wobei das 4,4'-MDI im Isocyanat und das PTMEG im Polyol biobasiert sind.

2. Schuhpresswalzenmantel nach Anspruch 1,
**dadurch gekennzeichnet, dass** das Polyurethan-Matrixmaterial zu wenigstens 50 Gew.-% biobasiert ist.

3. Schuhpresswalzenmantel nach einem der vorhergehenden Ansprüche,
**dadurch gekennzeichnet, dass** das 4,4'-MDI als Isocyanat in dem Polyurethan-Matrixmaterial, sofern es nicht als biobasiert im Anspruch 1 gekennzeichnet ist, erdölbasiert ist.

4. Schuhpresswalzenmantel nach einem der vorhergehenden Ansprüche,
**dadurch gekennzeichnet, dass** das wenigstens eine Polyol in dem Polyurethan-Matrixmaterial, sofern es nicht als biobasiert im Anspruch 1 gekennzeichnet ist, erdölbasiert ist.

5. Schuhpresswalzenmantel nach einem der vorhergehenden Ansprüche,
**dadurch gekennzeichnet, dass** der wenigstens eine Vernetzer in dem Polyurethan-Matrixmaterial, sofern er nicht als biobasiert im Anspruch 1 gekennzeichnet ist, erdölbasiert ist.

6. Schuhpresse für eine Maschine zur Herstellung und/oder Veredelung einer Faserstoffbahn, wie Papier-, Karton- oder Tissuebahn, umfassend einen Schuhpresswalzenmantel nach einem der vorhergehenden Ansprüche.

7. Maschine zur Herstellung und/oder Veredelung einer Faserstoffbahn, wie Papier-, Karton- oder Tissuebahn, umfassend eine Schuhpresse nach Anspruch 6.

## Claims

1. Shoe press roll cover for a machine for production and/or finishing of a fibrous material web, such as paper, cardboard or tissue web, comprising a matrix material composed of polyurethane formed essentially from 4,4'-MDI as isocyanate, at least one polyol and at least one crosslinker, **characterized in that** the polyurethane matrix material is biobased to an extent of at least 20% by weight, where the at least one polyol and the at least one crosslinker are selected from one of the following combinations:
a) PTMEG as polyol and a mixture of MCDEA and PTMEG as crosslinker, where the PTMEG in the polyol and in the crosslinker is biobased;
b) polycarbonate as polyol and a mixture of MCDEA and polycarbonate polyol as crosslinker, where the polycarbonate polyol in the crosslinker is biobased;
c) a mixture of polycarbonate polyol and PTMEG as polyol and 1,4-BDO as crosslinker, where the polycarbonate polyol in the polyol is biobased;
d) PTMEG as polyol and a mixture of PTMEG and MCDEA as crosslinker, where the 4,4'-MDI in the isocyanate and the PTMEG in the polyol are biobased.

2. Shoe press roll cover according to Claim 1,
**characterized in that** the polyurethane matrix material is biobased to an extent of at least 50% by weight.

3. Shoe press roll cover according to either of the preceding claims,
**characterized in that** the 4,4'-MDI as isocyanate in the polyurethane matrix material, if it is not identified as biobased in Claim 1, is mineral oil-based.

4. Shoe press roll cover according to any of the preceding claims,
**characterized in that** the at least one polyol in the polyurethane matrix material, if it is not identified as biobased in Claim 1, is mineral oil-based.

5. Shoe press roll cover according to any of the preceding claims,
**characterized in that** the at least one crosslinker in the polyurethane matrix material, if it is not identified as biobased in Claim 1, is mineral oil-based.

6. Shoe press for a machine for production and/or finishing of a fibrous material web, such as paper, cardboard or tissue web, comprising a shoe press roll cover according to any of the preceding claims.

7. Machine for production and/or finishing of a fibrous material web, such as paper, cardboard or tissue web, comprising a shoe press according to Claim 6.

## Revendications

1. Bandage de cylindre de presse à patin pour une machine de fabrication et/ou de finition d'une bande de matière fibreuse, comme une bande de papier, de carton ou de tissu, comprenant un matériau de matrice en polyuréthane qui est formé essentiellement à partir de 4,4'-MDI en tant qu'isocyanate, d'au moins un polyol et d'au moins un agent de réticulation,
**caractérisé en ce que** le matériau de matrice en polyuréthane est d'origine biologique à raison d'au moins 20 % en poids, l'au moins un polyol et l'au moins un agent de réticulation étant choisis parmi une des associations suivantes :
a) PTMEG en tant que polyol et un mélange de MCDEA et de PTMEG en tant qu'agent de réticulation, le PTMEG dans le polyol et dans l'agent de réticulation étant biobasé ;
b) polycarbonate en tant que polyol et un mélange de MCDEA et de polycarbonatepolyol en tant qu'agent de réticulation, le polycarbonatepolyol dans l'agent de réticulation étant biobasé ;
c) un mélange de polycarbonatepolyol et de PTMEG en tant que polyol et de 1,4-BDO en tant qu'agent de réticulation, le polycarbonatepolyol dans le polyol étant biobasé ;
d) PTMEG en tant que polyol et un mélange de PTMEG et de MCDEA en tant qu'agent de réticulation, le 4,4'-MDI dans l'isocyanate et le PTMEG dans le polyol étant biobasé.

2. Bandage de cylindre de presse à patin selon la revendication 1,
**caractérisé en ce que** le matériau de matrice en polyuréthane est biobasé à raison d'au moins 50 % en poids.

3. Bandage de cylindre de presse à patin selon l'une des revendications précédentes,
**caractérisé en ce que** le 4,4-MDI en tant qu'isocyanate dans le matériau de matrice en polyuréthane est à base de pétrole dans la mesure où il n'est pas caractérisé dans la revendication 1 comme étant biobasé.

4. Bandage de cylindre de presse à patin selon l'une des revendications précédentes,
**caractérisé en ce que** l'au moins un polyol dans le matériau de matrice en polyuréthane est à base de pétrole dans la mesure où il n'est pas caractérisé dans la revendication 1 comme étant biobasé.

5. Bandage de cylindre de presse à patin selon l'une des revendications précédentes,
**caractérisé en ce que** l'au moins un agent de réticulation dans le matériau de matrice en polyuréthane est à base de pétrole dans la mesure où il n'est pas caractérisé dans la revendication 1 comme étant biobasé.

6. Presse à patin pour une machine de fabrication et/ou de finition d'une bande de matière fibreuse, comme une bande de papier, de carton ou de tissu, comprenant un bandage de cylindre de presse à patin selon l'une des revendications précédentes.

7. Machine de fabrication et/ou de finition d'une bande de matière fibreuse, comme une bande de papier, de carton ou de tissu, comprenant une presse à patin selon la revendication 6.
